(19) Europäisches Patentamt
European Patent Office
Office européen des brevets

(11) Publication number: **0 111 829**
**B1**

(12) **EUROPEAN PATENT SPECIFICATION**

(45) Date of publication of patent specification: **08.04.87**

(51) Int. Cl.$^4$: **C 08 L 27/00**, C 08 K 5/15, C 08 K 5/58

(21) Application number: **83112278.3**

(22) Date of filing: **07.12.83**

(54) **Radiation-resistant vinyl chloride resin compositions.**

(30) Priority: **10.12.82 US 448678**
**15.11.83 US 551803**

(43) Date of publication of application:
**27.06.84 Bulletin 84/26**

(45) Publication of the grant of the patent:
**08.04.87 Bulletin 87/15**

(84) Designated Contracting States:
**DE FR GB IT NL SE**

(56) References cited:
**EP-A-0 032 106**
**BE-A- 679 526**
**FR-A-2 007 038**
**FR-A-2 109 945**
**GB-A-1 510 973**

**CHEMICAL ABSTRACTS, vol. 84, no. 14, 5th April 1976, page 36, no. 91027n, Columbus, Ohio, US**

(73) Proprietor: **AMERICAN HOECHST CORPORATION**
**Route 202-206 North**
**Somerville, N.J. 08876 (US)**

(72) Inventor: **Ejk, Adam Joseph**
**3 Land Court, Piscataway**
**New Jersey 08854 (US)**
Inventor: **Jachym, Mark A.**
**77 Ogden Court**
**East Brunswick, New Jersey 08816 (US)**

(74) Representative: **Meyer-Dulheuer, Karl-Hermann, Dr. et al**
**HOECHST Aktiengesellschaft Zentrale**
**Patentabteilung Postfach 80 03 20**
**D-6230 Frankfurt/Main 80 (DE)**

**EP 0 111 829 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to radiation-resistant vinyl choride resin compositions. More particularly it relates to gamma and other ionic radiation-resistant vinyl chloride resin compositions that can be used in the aseptic packaging of foods, drugs, medical articles such as syringes and hypodermic needles, and the like.

Aseptic packaging of foods and other products has been developed as a low-cost, refrigeration-saving method of preserving the products and/or protecting them against contamination and spoilage caused by microorganisms. In aseptic packaging procedures, packages containing the product may be subjected to sterilization, or a cold sterile product may be deposited in a presterilized package which is then closed or sealed under aseptic conditons, The methods that are used to sterilize the product and the package are limited to a considerable extent by the type of product being packaged and the choice of packaging material. The most commonly-used sterilization methods include heat treatment, the use of chemical sterilants, and exposure to ionic radiation. Each of these methods has disadvantages that limit its use. Heat sterilization can be used only with those products whose taste, odor, and color are not adversely affected by such treatment. When chemical sterilants are used, care must be taken to avoid leaving in the packages chemical residues that may be toxic or that may cause degradation of the packaging material with release of toxic materials. Exposure to ionic radiation is an excellent and efficient method of sterilizing medical and perishable products and certain packaging materials. Heretofore, however, it has not been possible to use unstabilized vinyl chloride resin composition as the packaging material in the aseptic packaging of products that are to be sterilized by ionic radiation because when exposed to the amount of radiation that is necessary to sterilize the products the vinyl choride resin compositions deteriorate rapidly, as is shown by their discoloration and ambrittlement.

The stabilization of vinyl chloride resins to make them heat-resistant is well-known in the art. Organotin compounds have long been recognized as one of the most effective heat stabilizers for vinyl choride resins; c f. the following documents: EP—A2—32 106, FR—A—2 109 945, GB—A—1 510 973, FR—A—2 007 038, Chemical Abstracts, Volume 84, No. 14, 5 April 1976, page 36, No. 91027n, BE—A—679 526. In the first three documents are disclosed as heat stabilizers for polyvinyl chloride organotin mercaptoacid esters, if appropriate, in combination with costabilizers such as phosphites and epoxidized oils or epoxidized fatty acid esters. In the FR—A—2 007 038 document and in the above-mentioned Chemical Abstract Reference is disclosed a heat and light stabilizer for vinyl chloride resins comprising a mixture of a metal salt of an aliphatic or aromatic carboxylic acid and an organotin mercaptoacid ester which may further contain phosphites, polyols and/or epoxidized soybean oil. In the last of the above-mentioned documents is disclosed a composition on the basis of a polyvinyl chloride stabilized against heat and light comprising a mixture of a vinyl chloride resin and a dialkyl tin sulfide, an organic phosphite and an epoxy compound as the stabilizer.

None of the above-mentioned documents deals with the stabilization of vinyl chloride resins against radiation nor gives it any suggestion for solving this problem.

In accordance with this invention, it has been found that vinyl chloride resin compositions that are characterized by excellent resistance to gamma radiation and other ionic radiation, excellent impact strength, early color, and other valuable properties result when certain stabilizers are incorporated into the compositions. The stabilizers used in this invention are thoroughly compatible with vinyl chloride resins and the other components of the resinous compositions, and they can be readily blended with these materials to form compositions that are resistant to deterioration resulting from exposure to gamma and other ionic radiation.

The radiation-resistant vinyl chloride resin composition asccording to the invention comprises a mixture of:

a) a vinyl chloride resin;

b) an organotin mercaptoacid ester having the formula

$$R_xSn(SR'COR'')_y$$

wherein R represents an alkyl group having 1 to 8 carbon atoms, R′ represents an alkylene group having 1 to 4 carbon atoms, R″ represents an alkyl, aryl, alkaryl or aralkyl group having 1 to 18 carbon atoms, and x and y represent numbers in the range of 1 to 3 whose total is 4; and

c) an epoxy compound selected from the group consisting of epoxidized cottonseed oil, linseed oil, olive oil, coconut oil and epozidized soybean oil and of esters of epoxidized fatty acids having 14 to 22 carbon atoms, said organotin mercaptoacid ester being present in an amount of 2 to 4% by weight, based on the weight of the vinyl chloride resin, and said epoxy compound being present in an amount of 3 to 5 parts by weight per part by weight of said organotin mercaptoacid ester.

While all of the epoxy compounds and organotin mercaptoacid esters disclosed above are useful as components to impart resistance to radiation and other valuable physical and mechanical properties to the vinyl chloride resin compositions, only those that have been granted government approval for use in food packaging are recommmended for use in the compositions of the invention.

Illustrative examples of esters of epoxidized fatty acids having 14 to 22 carbon atoms are methyl

epoxystearate, butyl epoxystearate, tridecyl epoxystearate, butyl epoxymyristate, butyl epoxypalmitate, octyl epoxytallate, and mixtures thereof.

The preferred organotin compound is a dioctyltin bis(alkylmercaptoacetate) having the formula

$$C_8H_{17})_2\ Sn(SCH_2COO\ R''')_2$$

wherein R''' is an alkyl group having 1 to 12 carbon atoms, preferably 6 to 10 carbon atoms. These compounds include dioctyltin bis (methyl meraptoacetate), dioctyltin bis (butyl mercaptoacetate), dioctyltin bis (2-ethylhexyl mercaptoacetate), dioctyltin bis dioctyltin bis (n-octyl mercaptoacetate), dioctyltin bis (isooctyl mercaptoacetate), and dioctyltin bis (decyl mercaptoacetate), and dioctyltin bis (dodecyl mercaptoacetate), and mixtures thereof. The dioctyltin bis (octyl mercaptoacetates) are preferred.

The stabilizer components used in the invention are of particular value in the stabilization of rigid polyvinyl chloride compositions, that is, compositions that are formulated to withstand temperatures of at least 175°C, for example, the pigmented compositions used in the production of pipe. Such compositions generally contain not more than 10 % by weight of one or more of conventional plasticizers. They may also be used in semi-rigid vinyl chloride compositions. The vinyl chloride resins that may be employed in such compositions include both homopolymers and copolymers formed by the polymerization of vinyl chloride with up to about 30 % of a comonomer such as vinyl acetate, vinyl butyrate, vinylidene chloride, ethylene, propylene, ethyl acrylate, methyl methacrylate, and styrene.

In addition to the vinyl choride resin and stabilizer, the radiation-resistant composition of this invention may contain such conventional resin additives as pigments, dyes, processing aids, lubricants, impact modifiers, fillers, and extenders in the amounts ordinarily employed for the purposes indicated.

The stabilized vinyl choride resin compositions may be prepared, for example by mixing the ingredients on a two- or three-roll mill, by blending in a mixer such as a Henschel blender, or by tumbling. The resulting composition may be further processed by injection molding, extrusion or calendering.

An effective source of ionizing radiation may be used to sterilize the vinyl chloride resin compositions of this invention or products that are packaged in these compositions. For example, a high energy electron accelerator of the Van de Graaf type may be used. Other suitable sources of ionic radiation include gamma radiation and x-rays. Sterilization procedures using gamma radiation or other ionizing radiation are quite desirable because they are carried out at ambient temperature and require only short treatment periods.

The dosage of radiation that is required is that which will effect the desired level of sterilization. In most cases, a dosage of 2 to 5 megarads is employed.

The invention is further illustrated by the following examples. In these examples, all parts are parts by weight and all percentages are percentages by weight.

Examples 1 to 3

A series of polyvinyl choride compositions was prepared by mixing together the materials shown in Table I in a Henschel blender at 3000 rpm at a temperature between 60°C and 90°C until a uniform composition was obtained. The resulting mixtures were charged to a two-roll mill, milled for 5 minutes, and then removed from the mill as sheets that were either 250 µm (i.e. 15 mils) thick.

TABLE I

| | Example Nos. 1 | 2 | 3 | Comparative Example |
|---|---|---|---|---|
| | Parts | | | |
| Polyvinyl chloride | 100 | 100 | 100 | 100 |
| Impact modifier-MBS type | 15.0 | 14.0 | 15.0 | 8.3 |
| Acrylic processing aid | 1.8 | 1.7 | 1.8 | 2.0 |
| Lubricating processing aid | — | — | — | 1.0 |
| Complex ester lubricants | 2.0 | 2.0 | 2.0 | 1.4 |
| Dioctyltin bis (isooctyl mercapto acetate) | 2.5 | 3.1 | 3.1 | 2.0 |
| Epoxidized soybean oil | 10.0 | 12.5 | 12.5 | — |
| Talc | — | — | — | 0.1 |
| Montan wax | — | — | — | — |

Example 4

Samples of the products of Example 1 and the Comparative Example were exposed to gamma radiation at the level of 2.5 megarads or 5.0 megarads and then evaluated by conventional test methods. For comparative purposes, samples of the non-irradiated products of Example 1 and the Comparative Example were included in the tests. The results obtained are summarized in Table II.

TABLE II

| | Gamma Radiation Level (megarads) | | |
|---|---|---|---|
| **Impact Resistance** | | | |
| (ASTM D-256) Izod Impact [$mkg/25mm^2$ (i.e. ft. lb./inch)] | 0 | 2.5 | 5.0 |
| Product of Ex. | | | |
| 250 μm | 1.5 | 2.0 | 5.0 |
| 380 μm | 1.5 | 2.1 | 5.1 |
| Product of Comp. Ex. | | | |
| 250 μm | 2.9 | 2.7 | 2.5 |
| **Deflection Temperature** | | | |
| (ASTM D-648) [°C at $1848 \cdot 10^{-3}$ $N/mm^2$ (i.e. °C at 264 psi)] | | | |
| Product of Ex. 1 | | | |
| 250 μm | 47.3 | 48.5 | 54.5 |
| 380 μm | 47.3 | 52.6 | 57.3 |
| Product of Comp. Ex. | | | |
| 250 μm | 64.8 | 63.3 | 63.3 |
| **Color Evaluation** | | | |
| (Macbeth 1500 Colorimeter) Differential from Standard-Macadam Units | | | |
| Product of Ex. 1 | | | |
| 250 μm | — | 4.1 | 10.5 |
| 380 μm | — | 9.2 | 22.5 |
| Product of Comp. Ex. | | | |
| 250 μm | — | 42.7 | 77.5 |
| 380 μm | — | 63.2 | 83.7 |

From the data in Table II, it will be seen that the properties of the product of Example 1, namely the impact strength and the heat distortion properties, improved dramatically with increased dosage of gamma radiation, whereas those of the comparative product remained substantially unchanged when it was exposed to gamma radiation. In addition, the colors of both the irradiated product and the non-irradiated product of Example 1 were much lighter and more stable than those of the corresponding comparative products.

Examples 5 and 6

Stabilizers were prepared by mixing together the materials shown in Table III until a homogeneous composition was obtained.

When each of these stabilizers was incorporated into a polyvinyl chloride composition in amounts that provided 2.5 parts by weight dioctyltin bis (isooctyl mercaptoacetate) per 100 parts by weight of polyvinyl

chloride, and the resulting compositions were evaluated by standard test methods, the results obtained were equivalent to those reported in Example 4 of the product of Example 1.

TABLE III

| | Example | |
|---|---|---|
| | 5 | 6 |
| Dioctyltin bis (isooctyl mercaptoacetate) | 2.5 parts | 3.0 parts |
| Epoxidized soybean oil | 10.0 | 12.5 |

Each of the other organotin compounds and epoxy compounds disclosed herein may be used in a similar manner to form stabilizers that will protect vinyl chloride resin compositions from degradation resulting from exposure to ionizing radiation.

**Claims**

1. A radiation-resistant vinyl chloride resin composition comprising a mixture of:
a) a vinyl chloride resin;
b) an organotin mercaptoacid ester having the formula

$$R_xSn(SR'COR'')_y$$

wherein R represents an alkyl group having 1 to 8 carbon atoms, R' represents an alkylene group having 1 to 4 carbon atoms, R'' represents an alkyl, aryl, alkaryl or aralkyl group having 1 to 18 carbon atoms, and x and y represent numbers in the range of 1 to 3 whose total is 4; and

c) an epoxy compound selected from the group consisting of epoxidized cottonseed oil, linseed oil, olive oil, coconut oil and epozidized soybean oil and of esters of epoxidized fatty acids having 14 to 22 carbon atoms, said organotin mercaptoacid ester being present in an amount of 2 to 4% by weight, based on the weight of the vinyl chloride resin, and said epoxy compound being present in an amount of 3 to 5 parts by weight per part by weight of said organotin mercaptoacid ester.

2. The composition of claim 1 wherein said organotin mercaptoacid ester comprises a material having the formula

$$C_8H_{17})_2\ Sn(SCH_2COOR''')_2$$

wherein R''' is an alkyl group having 1 to 12 carbon atoms, preferably 6 to 10 carbon atoms.

**Patentansprüche**

1. Strahlenbeständige Polyvinylchlorid-Formmasse, bestehend aus einer Mischung aus
a) einem Polyvinylchlorid;
b) einem Organozinn-Mercaptocarbonsäureester der Formel

$$R_xSn(SR'COR'')_y\ ,$$

in der bedeuten R eine Alkylgruppe mit 1 bis 8 Kohlenstoffatomen, R' eine Alkylengruppe mit 1 bis 4 Kohlenstoffatomen, R'' eine Alkyl-, Aryl-, Alkaryl- oder eine Aralkylgruppe mit 1 bis 18 Kohlenstoffatomen und x und y Zahlen in Bereich von 1 bis 3 mit einer Gesamtsumme von 4; und

c) eine Epoxyverbindung, ausgewählt aus der Gruppe bestehend aus expoxidiertem Baumwollöl, Linsenöl, Olivenöl, Kokosnußöl und epoxidiertem Sojabohnenöl und aus Estern von epoxidierten Fettsäuren mit 14 bis 22 Kohlenstoffatomen, wobei der Organozinn-Mercaptocarbonsäureester in einer Menge von 2 bis 4 Gew.-%, bezogen auf das Gewicht des Polyvinylchlorids, und die Epoxyverbindung in einer Menge von 3 bis 5 Gewichtsteilen pro Gewichtsteil Organzinn-Mercaptocarbonsäureester vorhanden sind.

2. Formmasse nach Anspruch 1, dadurch gekennzeichnet, daß der Organozinn-Mercaptocarbonsäureester eine Verbindung der nachstehenden Formel

$$C_8H_{17})_2\ Sn(SCH_2COOR''')_2$$

ist, in der R''' eine Alkylgruppe mit 1 bis 12 Kohlenstoffatomen ist.

**Revendications**

1. Une composition de résine de chlorure de vinyle qui résiste aux radiations, comprenant un mélange de:

a) une résine de chlorure de vinyle;

b) un ester de mercaptoacide organostannique (ester d'un organoétain-mercaptoacide) de formule

$$R_xSn(SR'COR'')_y$$

dans laquelle R représente un alkyle en $C_1$ à $C_8$, R' un alkylène en $C_1$ à $C_4$, R'' un alkyle, un aryle, un alcaryle ou un aralkyle en $C_1$ à $C_{18}$, et x et y sont des nombres de 1 à 3 dont le total est égal à quatre, et

c) un composé époxydique choisiparmi des huiles de coton, de lin, d'olive, de coco et de soja époxydées et des esters d'acides gras époxydés en $C_{14}$ à $C_{22}$, la proportion de l'ester d'organoétain-mercaptoacide étant de 2 à 4 % du poids de la résine de chlorure de vinyle et celle du composé époxydique de 3 à 5 parties en poids par partie de l'ester d'organoétain-mercaptoacide.

2. Une composition selon la revendication 1 dans laquelle l'ester d'organoétain-mercaptoacide comprend une matière de formule

$$(C_8H_{17})_2\ Sn(SCH_2COOR''')_2$$

R''' étant un alkyle en $C_1$ à $C_{12}$.